# EUROPÄISCHE PATENTSCHRIFT

(11) **EP 4 089 630 B1**
(45) Veröffentlichungstag und Bekanntmachung des Hinweises auf die Patenterteilung: **09.07.2025**
(21) Anmeldenummer: 21173581.6
(22) Anmeldetag: 12.05.2021
(51) Int. Cl.: G06T 7/00

(54) **VERFAHREN UND ANORDNUNG ZUM MESSEN EINES BAUFORTSCHRITTS BEI EINEM BAUWERK**
METHOD AND ASSEMBLY FOR MEASURING PROGRESS IN THE CONSTRUCTION OF A BUILDING
PROCÉDÉ ET AGENCEMENT DE MESURE DE L'AVANCEMENT DE LA CONSTRUCTION DANS UNE CONSTRUCTION

(43) Veröffentlichungstag der Anmeldung: 16.11.2022
(73) Patentinhaber: Siemens Schweiz AG, 8047 Zürich (CH)
(72) Erfinder: Mayer, Hermann Georg, 83209 Prien am Chiemsee (DE)
(74) Vertreter: Siemens Patent Attorneys

(56) Entgegenhaltungen:
- ZOLLMANN STEFANIE ET AL: "Augmented Reality for Construction Site Monitoring and Documentation", PROCEEDINGS OF THE IEEE, IEEE. NEW YORK, US, vol. 102, no. 2, 1 February 2014 (2014-02-01), pages 137 - 154, XP011537841, ISSN: 0018-9219, [retrieved on 20140120], DOI: 10.1109/JPROC.2013.2294314
- BRAUN ALEXANDER ET AL: "Automated Progress Monitoring Based on Photogrammetric Point Clouds and Precedence Relationship Graphs", 35TH INTERNATIONAL SYMPOSIUM ON AUTOMATION AND ROBOTICS IN CONSTRUCTION (ISARC 2018), 18 June 2015 (2015-06-18), pages 1 - 7, XP055853610, ISSN: 2413-5844, Retrieved from the Internet <URL:https://www.pf.bgu.tum.de/pub/2015/braun_co_stilla_isarc15_pap.pdf> DOI: 10.22260/ISARC2015/0034

## Beschreibung

Zeitgemäße Bauwerke werden in zunehmendem Maße anhand von digitalen Bauwerksmodellen, insbesondere anhand von sogenannten BIM-Modellen (BIM: Building Information Modelling) erstellt. Derartige BIM-Modelle enthalten in der Regel ein detailliertes 3-D-Modell des Bauwerks zusammen mit semantischen Angaben, die die einzelnen Bauwerkselemente des Bauwerks, zum Beispiel Wände, Decken, Böden, Fenster, Türen, Treppen oder Pfeiler sowie deren Beziehungen zueinander beschreiben.

Die Darstellung eines Bauwerks in einem digitalen Bauwerksmodell gibt in der Regel einen geplanten Zustand des Bauwerks wieder. Danach soll das Bauwerk so erstellt werden, dass seine Bauwerkselemente möglichst deckungsgleich mit ihrer Darstellung im Bauwerksmodell sind. In der Realität stellen sich aber häufig mehr oder weniger große Abweichungen ein, die nach Möglichkeit erkannt und überwacht werden sollten. Darüber hinaus ist es in der Regel wünschenswert, während der Bauphase einen aktuellen Baufortschritt des Bauwerks zu verfolgen und mit den Planungen abzugleichen.

Zur Erfassung von Planabweichungen bzw. des Baufortschritts werden häufig 3-D-Scanner, zum Beispiel Lidar- oder Laserscanner eingesetzt, mit denen das Bauwerk regelmäßig, häufig auch mehrmals pro Tag, gescannt wird. Ein besonderes Problem besteht indes darin, dass die 3-D-Scanner große Mengen von diskreten räumlichen Abtastpunkten, sogenannte Punktwolken von Objekten erzeugen, die zwar bei wiederholten Scans grob übereinstimmen, aber im Detail nur sehr schwer verglichen oder reproduziert werden können. Dies liegt unter anderem daran, dass die Abtastpunkte von verschiedenen Scans in der Regel in unterschiedlicher Weise gerastert sind. Zudem führen Unterschiede in den Beleuchtungsverhältnissen zu mehr oder weniger deutlichen Farb- und Helligkeitsunterschieden zwischen verschiedenen Scans. Hierdurch werden scannerbasierte Detailvergleiche von zu unterschiedlichen Zeitpunkten gescannten Objekten und damit eine genaue Erfassung und Dokumentation eines Baufortschritts erheblich erschwert.

Aus der Publikation "Point-to-point Comparison Method for Automated Scan-vs-BIM Deviation Detection" von Jingdao Chen und Yong K. Cho in den Proceedings of 17th International Conference on Computing in Civil and Building Engineering, Tampere, Finnland, 2018, ist ein Verfahren bekannt, mit dem Punktwolken mit existierenden BIM-Modellen abgeglichen werden können. Eine detaillierte Erfassung und Dokumentation eines Baufortschritts erfordert aber in der Regel einen erheblichen Aufwand.

Stefanie Zollmann et al., "Augmented Reality for Construction Site Monitoring and Documentation", Proceedings of the IEEE, IEEE New York, US, Bd. 102, Nr. 2, 1. Februar 2014, Seiten 137 - 154, ISSN: 0018-9219, DOI: 10.1109/JPROC.2013.2294314 offenbart die Überwachung eines Baufortschritts über gleichmäßig aufgenommene 3D-Rekonstruktion unter Verwendung von Luftbildaufnahmen und BIM-Daten. Spezielle BIM-Strukturen können halbautomatisch identifiziert werden. Die Visualisierung erfolgt mittels eines Fragment Shaders.

Alexander Braun et al., "Automated Progress Monitoring Based on Photogrammetric Point Clouds and Precedence Relationship Graphs", 35th International Symposium on Automation and Robotics in Construction (ISARC 2018), 18. Juni 2015, Seiten 1 - 7, ISSN: 2413-5844, DOI: 10.22260/ISARC2015/0034, https://www.pf.bgu.tum.de/pub/2015/ braun_co_stilla_isarc15_pap.pdf offenbart die bildbasierte Überwachung eines Baufortschritts unter mehrfachen Okklusionen auf der Basis eines Precedence Relation Graphen. In einer Variante werden GPS-basierte Luftbildaufnahmen verwendet.

Es ist Aufgabe der vorliegenden Erfindung, ein Verfahren und eine Anordnung anzugeben, durch die sich ein Baufortschritt effizienter ermitteln und dokumentieren lässt.

Gelöst wird diese Aufgabe durch ein Verfahren mit den Merkmalen des Patentanspruchs 1, durch eine Anordnung mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Zum Messen eines Baufortschritts bei einem Bauwerk wird ein digitales Bauwerksmodell des Bauwerks eingelesen. Ein solches Bauwerk kann insbesondere ein öffentliches oder privates Gebäude, ein Wohngebäude, ein Bürogebäude, ein Fabrikgebäude, ein Kraftwerk, ein Tunnel, eine Brücke, eine Straße, ein Schacht oder eine andere bauliche Konstruktion sein. Ein Baufortschritt kann dabei auch einen Fortschritt bei einem Umbau oder Rückbau des Bauwerks betreffen. Anhand des Bauwerksmodells wird für ein jeweiliges Bauwerkselement eine räumliche Anordnung einer Bauwerkselementfläche im Bauwerk ermittelt. Weiterhin wird das Bauwerk mittels eines 3-D-Scanners abgetastet, wobei eine Vielzahl von räumlichen Abtastpunkten erzeugt wird. Zumindest ein Teil der Abtastpunkte wird dann räumlich entsprechenden Bauwerkselementflächen zugeordnet. Erfindungsgemäß wird für eine jeweilige Bauwerkselementfläche anhand von den dieser Bauwerkselementfläche spezifisch zugeordneten Abtastpunkten eine bauwerkselementflächenspezifische Tiefenkarte generiert. Zur Ermittlung eines Baufortschritts werden dann die generierten Tiefenkarten mit früher generierten Tiefenkarten verglichen.

Zum Ausführen des erfindungsgemäßen Verfahrens sind eine Anordnung zum Messen eines Baufortschritts bei einem Bauwerk, ein Computerprogrammprodukt sowie ein computerlesbares, vorzugsweise nichtflüchtiges Speichermedium vorgesehen.

Das erfindungsgemäße Verfahren, die erfindungsgemäße Anordnung sowie das erfindungsgemäße Computerprogrammprodukt können insbesondere mittels eines oder mehrerer Computer, eines oder mehrerer Prozessoren, anwendungsspezifischer integrierter Schaltungen (ASIC), digitaler Signalprozessoren (DSP), einer Cloud-Infrastruktur und/oder sogenannter "Field Programmable Gate Arrays" (FPGA) ausgeführt werden.

Ein wesentlicher Vorteil der Erfindung ist insbesondere darin zu sehen, dass aufgrund der Generierung und des Vergleichs von bauwerkselementflächenspezifischen Tiefenkarten kein aufwendiger und oft ungenauer Vergleich von Punktwolken mehr erforderlich ist. Weiterhin können die zu dokumentierenden Datenmengen - nicht zuletzt wegen einer häufig besseren Komprimierbarkeit und Vergleichbarkeit von Tiefenkarten - in der Regel erheblich reduziert werden. Darüber hinaus können viele Verfahrensschritte durch herkömmliche Grafikprozessoren auf besonders effiziente Weise ausgeführt werden.

Vorteilhafte Ausführungsformen und Weiterbildungen der Erfindung sind in den abhängigen Ansprüchen angegeben.

Gemäß einer vorteilhaften Weiterbildung der Erfindung kann eine Abweichung einer aktuell für eine Bauwerkselementfläche generierten Tiefenkarte von einer früher für diese Bauwerkselementfläche generierten Tiefenkarte ermittelt werden. Abhängig von der ermittelten Abweichung kann dann eine für diese Bauwerkselementfläche spezifische Baufortschrittsinformation ausgegeben werden. Als Abweichung kann insbesondere eine Differenz zwischen den Tiefenkarten, z.B. in Form eines Differenzbildes ermittelt werden. Eine große Abweichung oder Differenz kann dabei einen signifikanten Baufortschritt anzeigen. Insbesondere kann vorgesehen sein, eine jeweilige Abweichung mit einem vorgegebenen Schwellenwert zu vergleichen und bei Überschreitung des Schwellenwerts eine entsprechende Baufortschrittsinformation auszugeben. Die früher generierte Tiefenkarte kann insbesondere auch aus dem Bauwerksmodell generiert werden. In diesem Fall kann ein Baufortschritt relativ zu einem geplanten Bauwerkszustand ermittelt werden.

Vorteilhafterweise kann eine aktuell für eine Bauwerkselementfläche generierte Tiefenkarte in Form einer Abweichung von einer früher für diese Bauwerkselementfläche generierten Tiefenkarte gespeichert werden. Die Abweichung kann hierbei wie oben beschrieben ermittelt werden. Insofern derartige Abweichungen oft erheblich geringere Werte als die involvierten Tiefenkarten aufweisen, kann so ein Speicherbedarf in vielen Fällen erheblich verringert werden. Insbesondere können bei geringen Abweichungen Differenzbilder der Tiefenkarten anstelle der aktuellen Tiefenkarten gespeichert werden und bei größeren Abweichungen die aktuellen Tiefenkarten selbst. Besonders effizient können die Abweichungen mittels eines Fragment-Shaders, insbesondere durch einen Grafikprozessor ermittelt werden.

Nach einer vorteilhaften Ausführungsform der Erfindung können die generierten Tiefenkarten anhand der ermittelten Abweichungen individuell für eine jeweilige Bauwerkselementfläche versioniert werden. Dies erlaubt eine besonders effiziente Versionierung, da bei Bauwerkselementflächen, die sich nicht oder nur wenig ändern, keine oder nur wenige Daten zu speichern sind.

Nach einer vorteilhaften Implementierungsvariante der Erfindung können eine oder mehrere Bauwerkselementflächen anhand von Unstetigkeiten im Verlauf einer Oberflächennormale eines Bauwerkselements und/oder anhand von Unstetigkeiten im Verlauf einer Materialeigenschaft, z.B. einer Farbe, einer Reflektivität und/oder einer Lichtdurchlässigkeit eines Bauwerkselements ermittelt werden. Ein Verlauf von Oberflächennormalen und/oder Materialeigenschaften kann in vielen Fällen dem digitalen Bauwerksmodell entnommen werden. Auf diese Weise können verschiedene Bauwerkselementflächen voneinander abgegrenzt und/oder ein Bauwerkselement in verschiedene Bauwerkselementflächen zerlegt werden.

Gemäß einer weiteren vorteilhaften Implementierungsvariante der Erfindung kann das digitale Bauwerksmodell einen Bauwerksgraphen umfassen, in dem Bauwerkselemente als Knoten und Beziehungen zwischen Bauwerkselementen als Kanten gespeichert sind. Damit können für ein jeweiliges Bauwerkselement ein oder mehrere Bauwerkselementflächen ermittelt und als zusätzliche, dem jeweiligen Bauwerkselement zugeordnete Knoten gespeichert werden. Weiterhin kann eine für eine jeweilige Bauwerkselementfläche generierte Tiefenkarte in Zuordnung zu dem Knoten dieser Bauwerkselementfläche gespeichert werden. Eine Zuordnung einer Bauwerkselementfläche zu einem zugehörigen Bauwerkselement und/oder eine Zuordnung einer Tiefenkarte zu einer zugehörigen Bauwerkselementfläche kann jeweils durch eine Kante des Bauwerksgraphen dargestellt werden. Insbesondere können Bauwerkselementflächen und/oder Tiefenkarten dem digitalen Bauwerksmodell als weitere Hierarchiestufe hinzugefügt werden. Auf diese Weise können die ermittelten Bauwerkselementflächen und/oder Tiefenkarten auf besonders effiziente Weise verwaltet werden.

Nach einer weiteren vorteilhaften Ausführungsform der Erfindung kann eine Verdeckung und/oder Sichtbarkeit einer jeweiligen Bauwerkselementfläche geprüft werden. Die Zuordnung von Abtastpunkten zu einer jeweiligen Bauwerkselementfläche kann dann abhängig von deren Sichtbarkeit und/oder Verdeckung erfolgen. Insbesondere kann eine jeweilige Bauwerkselementfläche verworfen, nicht gespeichert und/oder markiert werden, falls sie als verdeckt oder nicht sichtbar erkannt wird. Darüber hinaus können durch eine Verkleidung verdeckte, innere oder sich in anderen Räumen befindliche Bauwerkselemente bzw. deren Bauwerkselementflächen als verdeckt oder nicht sichtbar markiert werden. Gegebenenfalls kann eine jeweilige Bauwerkselementfläche in verdeckte oder sichtbare Teile unterteilt werden. So kann eine mehrere Räume begrenzende Wand in die in den einzelnen Räumen jeweils sichtbaren Wandflächen unterteilt werden. Die Prüfung auf Verdeckung oder Sichtbarkeit kann beispielsweise anhand des Attributs IFCRelSpaceBoundary eines BIM-Modells erfolgen.

Weiterhin kann eine Position des 3-D-Scanners relativ zum Bauwerk eingelesen werden. Die Prüfung auf Verdeckung und/oder Sichtbarkeit einer jeweiligen Bauwerkselementfläche kann dann abhängig von der eingelesenen Position erfolgen. Insbesondere kann bei bekannter Position ein durch bekannte Objekte im Raum begrenzter Sichtbarkeitskegel für den 3-D-Scanner ermittelt werden. Anhand eines solchen Sichtbarkeitskegels kann anhand der Abtastpunkte auf effiziente Weise geprüft werden, ob oder wo sich gegebenenfalls weitere, unbekannte Objekte zwischen dem 3-D-Scanner und einem jeweiligen Bauwerkselement befinden.

Darüber hinaus kann abhängig von einer Verdeckung und/oder Sichtbarkeit einer jeweiligen Bauwerkselementfläche und abhängig von einer Prüfung, ob der jeweiligen Bauwerkselementfläche gemessene Abtastpunkte räumlich entsprechen, die jeweilige Bauwerkselementfläche als fehlend markiert werden. Eine Bauwerkselementfläche kann insbesondere dann als fehlend markiert werden, wenn sie als sichtbar oder nicht verdeckt erkannt wird und ihr keine Abtastpunkte zugeordnet werden.

Nach einer weiteren vorteilhaften Ausführungsform der Erfindung kann die Generierung der Tiefenkarten mittels eines Vertex-Shaders, insbesondere durch einen Grafikprozessor erfolgen. Derartige Vertex-Shader, insbesondere von Graphikprozessoren sind in der Regel spezifisch für derartige Berechnungen ausgelegt und erlauben eine besonders effiziente Generierung von Tiefenkarten.

Ein Ausführungsbeispiel der Erfindung wird nachfolgend anhand der Zeichnung näher erläutert. Dabei veranschaulichen jeweils in schematischer Darstellung:
- Figur 1:: eine Erweiterung eines Bauwerksmodells um Bauwerkselementflächen,
- Figur 2:: eine erfindungsgemäße Anordnung beim Messen eines Baufortschritts,
- Figur 3:: die erfindungsgemäße Anordnung bei einer zweiten Messung und
- Figur 4:: einen Vergleich von Abtastpunkten verschiedener Messungen.

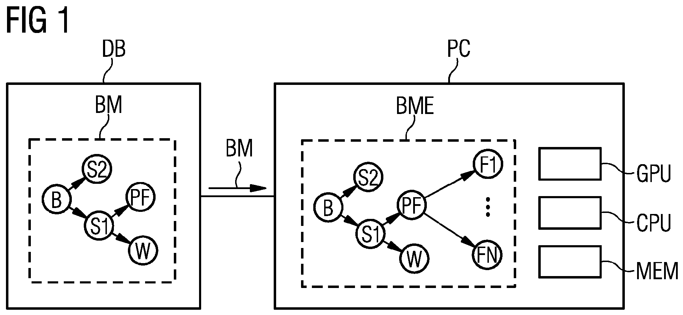

Figur 1 veranschaulicht eine Erweiterung eines digitalen Bauwerksmodells BM eines Bauwerks B um Bauwerkselementflächen F1, ..., FN zu einem erweiterten Bauwerksmodell BME. Das Bauwerk B kann dabei ein öffentliches oder privates Gebäude, ein Wohngebäude, ein Bürogebäude, ein Fabrikgebäude, ein Kraftwerk, ein Tunnel, eine Brücke, eine Straße oder eine andere bauliche Konstruktion sein.

Das digitale Bauwerksmodell BM gibt einen geplanten Zustand des Bauwerks B an und kann vorzugsweise ein sogenanntes BIM-Modell (BIM: Building Information Modelling) oder ein anderes CAD-Modell des Bauwerks B sein. Durch das Bauwerksmodell BM wird eine Vielzahl von Bauwerkselementen des Bauwerks B, wie zum Beispiel Wände, Decken, Böden, Fenster, Türen, Treppen und/oder andere spezifische Konstruktionselemente in maschinenlesbarer Form durch eine Vielzahl von ein jeweiliges Bauwerkselement spezifizierenden Datensätzen beschrieben. Das Bauwerksmodell BM spezifiziert weiterhin auch eine Vielzahl von Beziehungen zwischen Bauwerkselementen durch entsprechende Datensätze. So kann durch eine jeweilige Beziehungsangabe beispielsweise eine Tür oder ein Fenster derjenigen Wand zugeordnet werden, in die die betreffende Tür bzw. das betreffende Fenster planungsgemäß einzusetzen ist.

Im vorliegenden Ausführungsbeispiel ist das Bauwerksmodell BM in einer Datenbank DB gespeichert und umfasst insbesondere einen Bauwerksgraphen. In diesem Bauwerksgraphen werden Bauwerkselemente des Bauwerks B durch Knoten und Beziehungen zwischen den Bauwerkselementen durch Kanten dargestellt.

Im vorliegenden Ausführungsbeispiel umfasst der Bauwerksgraph folgende Bauwerkselemente: das Bauwerk B selbst, mehrere Stockwerke S1 und S2 des Bauwerks B, sowie eine Wand W und ein Pfeiler PF im Stockwerk S1. Die Stockwerke S1 und S2 sind dem Bauwerk B über durch Pfeile dargestellte Kanten zugeordnet, ebenso wie die Wand W und der Pfeiler PF dem Stockwerk S1. Neben den Bauwerkselementen B, S1, S2, PF und W umfasst das geplante Bauwerk B noch viele weitere Bauwerkselemente, die ebenfalls im Bauwerksgraphen gespeichert, aus Übersichtlichkeitsgründen aber nicht dargestellt sind.

Das Bauwerksmodell BM wird durch einen Rechner PC aus der Datenbank DB abgerufen und zu einem erweiterten Bauwerksmodell BME erweitert. Der Rechner PC verfügt über einen oder mehrere Prozessoren CPU zum Ausführen von Verfahrensschritten des erfindungsgemäßen Verfahrens sowie über einen oder mehrere Speicher MEM zum Speichern von zu verarbeitenden Daten. Darüber hinaus umfasst der Rechner PC eine Graphikkarte GPU mit einem oder mehreren Graphikprozessoren. Die Graphikkarte GPU umfasst eine Vielzahl von Vertex-Shadern und Fragment-Shadern zum Ausführen von Verfahrensschritten des erfindungsgemäßen Verfahrens.

Zur Erweiterung des Bauwerksmodells BM wird durch den Rechner PC für ein jeweiliges Bauwerkselement des Bauwerksmodells BM eine räumliche Anordnung von Oberflächen oder Oberflächenelementen dieses Bauwerkselements ermittelt. Die ermittelten Oberflächen oder Oberflächenelemente werden zusammen mit ihrer räumlichen Anordnung dem betreffenden Bauwerkselement im Bauwerksgraphen als dessen Bauwerkselementflächen über Kanten zugeordnet.

Figur 1 veranschaulicht beispielhaft, wie anhand des Bauwerksmodells BM sichtbare oder exponierte Oberflächen oder Oberflächenelemente des Pfeilers PF ermittelt und diesem als Bauwerkselementflächen F1, ..., FN im Bauwerksgraphen zugeordnet werden. Durch die Hinzufügung der Bauwerkselementflächen F1, ..., FN und ggf. weiterer nicht dargestellter Bauwerkselementflächen wird das digitale Bauwerksmodell BM zum erweiterten digitalen Bauwerksmodell BME erweitert.

Als Kriterien für die Ermittlung von Oberflächen oder Oberflächenelementen von Bauwerkselementen können Unstetigkeiten im Verlauf einer Oberflächennormale eines betreffenden Bauwerkselements oder Unstetigkeiten im Verlauf einer Materialeigenschaft, zum Beispiel einer Helligkeit oder eine Farbe, verwendet werden. Für Bauwerkselemente mit einfacher Geometrie wie zum Beispiel quaderförmige oder zylinderförmige Bauwerkselemente ist eine Zerlegung in Bauwerkselementflächen auf verhältnismäßig einfache Weise anhand des Bauwerksmodells BM vorzunehmen. Bei komplexeren gekrümmten Flächen kann alternativ oder zusätzlich auf eine geringere Detailstufe zurückgegriffen werden oder eine minimale, quaderförmige sogenannte Bounding-Box um das Bauwerkselement ermittelt werden.

Durch die Zuordnung von Bauwerkselementflächen zu einem jeweiligen Bauwerkselement können Daten über die räumliche Anordnung von sichtbaren Bauwerkselementflächen auf natürliche Weise im erweiterten Bauwerksmodell BME verwaltet werden. Vorzugsweise werden die Bauwerkselementflächen als weitere Hierarchiestufe im erweiterten Bauwerksmodell BME definiert. Bei Bedarf können einzelne Bauwerkselementflächen im erweiterten Bauwerksmodell BME auch noch weiter unterteilt werden, um beispielsweise eine teilweise Sichtbarkeit oder teilweise Verdeckung zu spezifizieren.

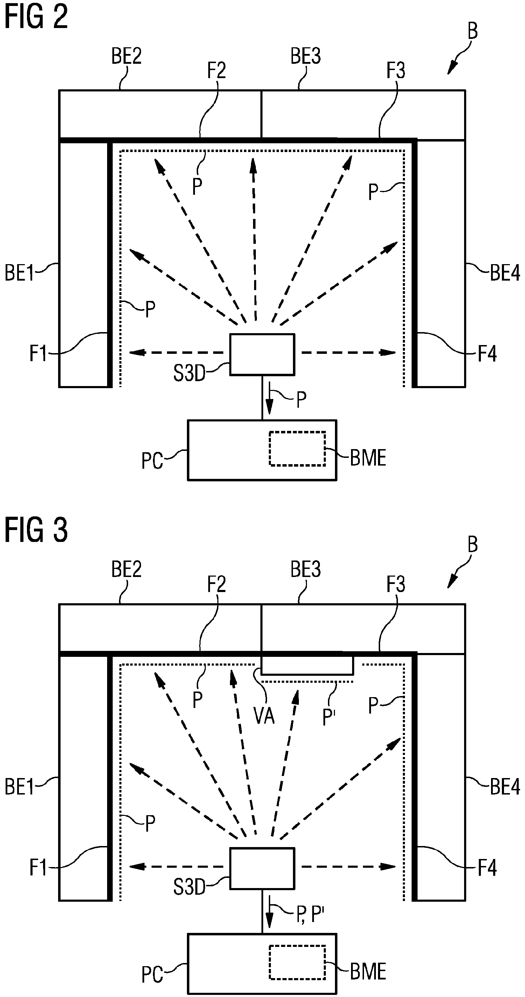

Figur 2 zeigt in schematischer Darstellung eine erfindungsgemäße Anordnung mit einem Rechner PC und einem daran gekoppelten 3-D-Scanner S3D zum Messen eines Baufortschritts bei einem Bauwerk B. Der Baufortschritt kann hierbei auch einen Fortschritt bei einem Rückbau, bei einem Umbau oder bei einer Entkernung betreffen. Insofern in den Figuren gleiche oder korrespondierende Bezugszeichen verwendet werden, bezeichnen diese Bezugszeichen gleiche oder korrespondierende Entitäten, die wie bei der betreffenden Figur beschrieben, ausgestaltet oder implementiert sein können.

In Figur 2 sind Bauwerkselemente BE1, BE2, BE3 und BE4 des Bauwerks B beispielhaft und symbolisch dargestellt. Für die Bauwerkselemente BE1, ..., BE4 wurden, wie oben beschrieben, deren Bauwerkselementflächen F1, ..., F4 ermittelt und jeweils dem betreffenden Bauwerkselement BE1, BE2, BE3 bzw. BE4 im erweiterten Bauwerksmodell BME zugeordnet. Die Bauwerkselementflächen F1, ..., F4 sind in Figur 2 durch verdickte Linien hervorgehoben. Das erweiterte Bauwerksmodell BME ist im Rechner PC gespeichert.

Zum Messen des Baufortschritts wird das Bauwerk B bzw. dessen sichtbarer Teil vom 3-D-Scanner S3D, zum Beispiel einem Lidar- oder einem Laserscanner, abgetastet, wobei eine Vielzahl von räumlichen Abtastpunkten P erzeugt wird. Die Abtastpunkte P sind in Figur 2 durch punktierte Linien veranschaulicht.

Die Abtastpunkte P werden vom 3-D-Scanner S3D zum Rechner PC übermittelt. Durch den Rechner PC werden die Abtastpunkte P räumlich entsprechenden Bauwerkselementflächen, hier F1, ..., F4 zugeordnet. Zu diesem Zweck wird für einen jeweiligen Abtastpunkt P geprüft, welcher der Bauwerkselementflächen, hier F1, ..., F4 er räumlich entspricht. Alternativ oder zusätzlich kann für eine jeweilige Bauwerkselementfläche F1, ..., F4 geprüft werden, welche Abtastpunkte P ihr räumlich entsprechen.

Eine räumliche Entsprechung kann insbesondere dadurch festgestellt werden, dass räumliche Koordinaten eines jeweiligen Abtastpunkts P und einer jeweiligen Bauwerkselementfläche F1, ..., F4 ggf. nach einer geeigneten Verschiebung und/oder Drehung eines Bezugssystems innerhalb eines vorgegebenen Toleranzbereichs übereinstimmen. Zur Unterstützung einer solchen Prüfung oder Zuordnung können Aufnahmen des 3-D-Scanners S3D mittels optischer Marker registriert werden. Darüber hinaus kann eine räumliche Position des 3-D-Scaners S3D erfasst und bei der Prüfung oder Zuordnung berücksichtigt werden.

Die Zuordnung von Abtastpunkten P zu Bauwerkselementflächen F1, ..., F4 kann so lange wiederholt werden, bis entweder alle oder nahezu alle Abtastpunkte P einer Bauwerkselementfläche zugeordnet werden konnten oder Abtastpunkte P verbleiben, die sich nicht eindeutig zuordnen lassen. Die letztgenannten Abtastpunkte P können für das weitere Verfahren verworfen werden, oder es könnte versucht werden, anhand der nicht zuordenbaren Abtastpunkte P im Bauwerksmodell BM nicht vorgesehene Objekte zu erkennen, zu vermessen oder zu identifizieren.

Anhand der einer jeweiligen Bauwerkselementfläche F1, ... bzw. F4 zuordenbaren Abtastpunkte P werden erfindungsgemäß eine bauwerkselementflächenspezifische Tiefenkarte für die betreffenden Bauwerkselementfläche F1, ... bzw. F4 generiert. Die Textur trägt hierbei eine Farbinformation der betreffenden Abtastpunkte während die Tiefenkarte entsprechend eine Tiefeninformation dieser Abtastpunkte trägt. Eine derartige Tiefenkarte wird häufig auch als Displacement-Map bezeichnet. Tiefenkarten werden herkömmlicherweise von Graphikprozessoren beim Rendern von 3-D-Objekten verwendet. Die Tiefenkarten werden dabei als Bilder auf die zu rendernden 3-D-Objekte projiziert, um eine möglichst realistische Darstellung der 3-D-Objekte zu gewährleisten. Insofern viele Graphikprozessoren spezifisch für derartige Aufgaben ausgelegt sind, kann die Generierung der Tiefenkarten auf besonders effiziente Weise durch den Graphikprozessor GPU des Rechners PC ausgeführt werden.

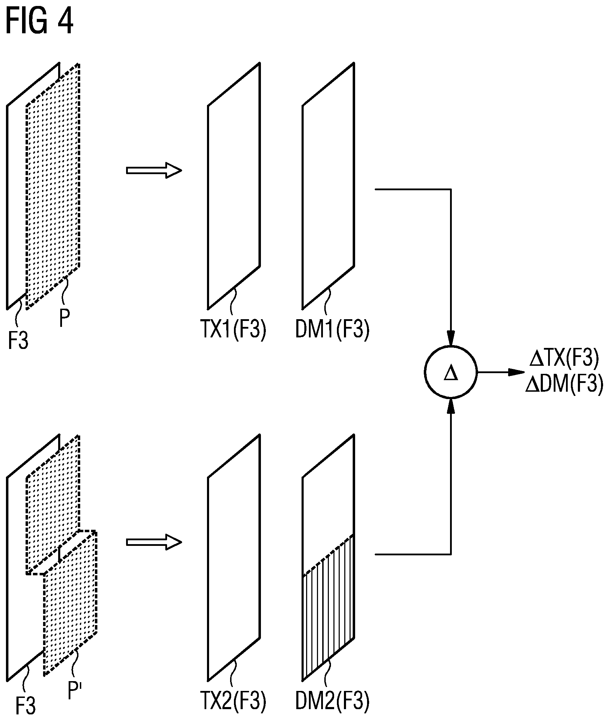

Die Generierung der Tiefenkarten wird nachfolgend anhand der Figuren 3 und 4 näher beschrieben. Figur 3 zeigt die schon in Figur 2 dargestellte Anordnung bei einer zweiten Messung in schematischer Darstellung. Gegenüber dem in Figur 2 dargestellten Zustand des Bauwerks B wurde auf der Bauwerkselementfläche F3 im Rahmen der Bauarbeiten ein vorspringender Aufbau VA, zum Beispiel eine Wandverkleidung angebracht. Der vorspringende Aufbau VA verdeckt die Bauwerkselementfläche F3 teilweise.

Der vorspringende Aufbau VA wird vom 3-D-Scanner S3D abgetastet, wobei die Abtastpunkte P' erzeugt werden. Die Abtastpunkte P' sind aufgrund des vorspringenden Aufbaus VA - anders als die übrigen der Bauwerkselementfläche F3 zugeordneten Abtastpunkte P in Richtung des 3-D-Scanners S3D versetzt. Aufgrund der räumlichen Nähe der Abtastpunkte P' zur Bauwerkselementfläche F3 werden diese Abtastpunkte P' gleichwohl dieser Bauwerkselementfläche F3 als räumlich entsprechend zugeordnet.

Die Generierung einer Tiefenkarte für eine jeweilige Bauwerkselementfläche wird nachfolgend am Beispiel der Bauwerkselementfläche F3 näher erläutert.

Zunächst wird ein sogenannter Vertex-Shader der Graphikkarte GPU benutzt, um die Abstände aller der Bauwerkselementfläche F3 zugeordneten Abtastpunkte P und P' von der Bauwerkselementfläche F3 zu berechnen und in Zuordnung zu dieser Bauwerkselementfläche F3 zu speichern. Abtastpunkte, die nicht zur Bauwerkselementfläche F3 gehören, können über eine Clipping-Stufe entfernt werden. Zu diesem Zweck kann ein Toleranzbereich vorgesehen sein, um eine Tiefe einer Clipping-Ebene festzulegen.

Anhand der Abstände der Punkte, die innerhalb des Toleranzbereichs verbleiben, können auch flache Objekte auf der Bauwerkselementfläche F3 dargestellt werden, für die ggf. kein eigenes Bauwerkselement im Bauwerksmodell BM existiert, wie zum Beispiel Steckdosen, Schalter oder Kabelkanäle. Damit Bauwerksobjekte in ausreichender Auflösung dargestellt werden können, kann für jede Tiefenkarte vorab eine entsprechende Auflösung vorgegeben werden; beispielsweise die Größe der Bauwerkselementfläche geteilt durch eine doppelte Auflösung des 3-D-Scanners S3D.

Mittels einer Render-Pipeline der Graphikkarte GPU werden die der Bauwerkselementfläche F3 zugeordneten Abtastpunkte P und P' auf diese Bauwerkselementfläche F3 interpoliert. Dies gilt sowohl für eine Tiefeninformation als auch für eine Farbinformation der Abtastpunkte P und P'. Die Tiefeninformation wird entsprechend als Tiefenkarte oder Displacement-Map gespeichert, während die Farbinformation als Textur abgespeichert wird. Jeder Bauwerkselementfläche F1, ..., F4 können damit zwei Bilder, nämlich eine Textur und eine Tiefenkarte mit gleicher Auflösung zugeordnet werden. Diese Bilder können effizient abgespeichert werden, insbesondere wenn eine uniforme Verteilung der Abtastpunkte P und P' vorliegt. Falls im Extremfall alle Abtastpunkte P und P' für eine Bauwerkselementfläche den gleichen Abstand von dieser Bauwerkselementfläche haben, so lässt sich die zugehörige Tiefenkarte mit einem einzigen Wert codieren.

Figur 4 veranschaulicht einen Vergleich von Abtastpunkten verschiedener Messungen am Beispiel der Bauwerkselementfläche F3.

Der obere Teil von Figur 4 veranschaulicht dabei die im Zusammenhang mit Figur 2 beschriebene erste Messung, während der untere Teil von Figur 4 die im Zusammenhang mit Figur 3 beschriebene zweite Messung veranschaulicht.

Bei der ersten Messung war die Bauwerkselementfläche F3 noch nicht durch den vorspringenden Aufbau VA teilweise verdeckt, so dass der 3-D-Scanner S3D die Bauwerkselementfläche F3 sensieren konnte und eine an der Bauwerkselementfläche F3 nahezu anliegende Menge von Abtastpunkten P generiert hat. Der in Figur 4 dargestellte Abstand zwischen den Abtastpunkten P und der Bauwerkselementfläche F3 ist aus Übersichtlichkeitsgründen stark überhöht dargestellt.

Anhand der Bauwerkselementfläche F3 und der Abtastpunkte P werden für die Bauwerkselementfläche F3 eine erste Textur TX1 sowie eine erste Tiefenkarte DM1 generiert. Insofern die Abtastpunkte P einen im Rahmen der Messgenauigkeit nahezu konstanten Abstand zur Bauwerkselementfläche F3 ausweisen, kann die Tiefenkarte DM1 sehr effizient codiert bzw. komprimiert werden. Das Gleiche gilt für die Textur TX1, falls die Bauwerkselementfläche F3 eine einheitliche oder nahezu einheitliche Farbe aufweist.

Bei der zweiten Messung wird - wie oben bereits erwähnt - die Bauwerkselementfläche F3 teilweise von dem vorspringenden Aufbau VA verdeckt. Infolgedessen sind die vom vorspringenden Aufbau VA stammenden Abtastpunkte P' nach vorne versetzt. Anhand der Bauwerkselementfläche F3 sowie der Abtastpunkte P und P' werden, wie oben beschrieben, eine zweite Textur TX2 sowie eine zweite Tiefenkarte DM2 generiert. Aufgrund eines einheitlichen größeren Abstandes der Abtastpunkte P' von der Bauwerkselementfläche F3 wird in einem unteren, schraffierten Teil der zweiten Tiefenkarte DM2 ein höherer Abstand bzw. eine geringere Tiefe codiert als im oberen, nicht schraffierten Teil.

Erste Versionen einer jeweiligen Tiefenkarte, hier DM1, oder Textur, hier TX1, können bauwerkselementflächenspezifisch in einem Versionsverwaltungssystem als Basisversion in gepackter Form gespeichert werden. Eine jeweilige erste Version kann für verschiedene Bauwerkselementflächen auch zu verschiedenen Zeitpunkten angelegt werden. So können Bauobjekte noch fehlen, die erst in späteren Bauabschnitten erstellt werden.

Spätere Versionen einer jeweiligen Tiefenkarte, hier DM2, oder Textur, hier TX2, können vorteilhafterweise relativ zu einer jeweiligen früheren Version gespeichert werden. Im vorliegenden Fall werden die ersten Texturen, hier TX1, und ersten Tiefenkarten, hier DM1, als solche gespeichert. Die zweiten Texturen, hier TX2, und Tiefenkarten, hier DM2, werden vorteilhafterweise nicht als solche gespeichert, sondern nur in Form einer Differenz zu den ersten Texturen TX1 und Tiefenkarten DM1. Im vorliegenden Fall wird ein Differenzbild ΔTX zwischen der jeweiligen zweiten Textur TX2 und der jeweiligen ersten Textur TX1 sowie ein Differenzbild ΔDM zwischen der jeweiligen zweiten Tiefenkarte DM2 und der jeweiligen ersten Tiefenkarte DM1 gebildet. In vielen Fällen unterscheiden sich die Texturen und Tiefenkarten verschiedener Messungen nur geringfügig - insbesondere bei Bauwerkselementflächen, die nicht verändert wurden - und können deshalb in Form von Differenzbildern, hier ΔTX und ΔDM, sehr effizient codiert bzw. komprimiert werden. Zudem lässt sich aus einem Differenzbild auf besonders einfache Weise eine Baufortschrittsinformation ableiten.

Insbesondere können die Texturen und Tiefenkarten bzw. deren Differenzbilder anstelle der Abtastpunkte abgespeichert werden, wodurch sich in der Regel eine erhebliche Einsparung an Speicherplatz erzielen lässt. Die Speicherung erfolgt insbesondere in Zuordnung zur betreffenden Bauwerkselementfläche.

Bei einer Beurteilung eines Baufortschritts ist häufig zu entscheiden, ob eine Bauwerkselementfläche ohne zugeordnete Abtastpunkte tatsächlich noch nicht oder nicht mehr existiert, oder ob sie zum Beispiel aufgrund einer Verdeckung nur nicht erfasst wurde. In solchen Fällen kann anhand einer erfassten Position des 3-D-Scanners S3D mittels der Graphikpipeline der Graphikkarte GPU, zum Beispiel durch sogenanntes z-Culling ermittelt werden, welche Oberflächen vom 3-D-Scanner S3D eingesehen werden können.

Insbesondere kann bei bekannter Aufnahmeposition und für bekannte Objekte ein durch letztere beschränkter Sichtbarkeitskegel berechnet werden. Anhand der Abtastpunkte und des Sichtbarkeitskegels kann dann effizient geprüft werden, ob und wo sich weitere unbekannte Objekte zwischen dem 3-D-Scanner S3D und einer jeweiligen Bauwerkselementfläche befinden. Falls dann Bauwerkselementen, die auf diese Weise als sichtbar bewertet wurden, trotzdem keine Abtastpunkte zugeordnet werden können, so kann in vielen Fällen davon ausgegangen werden, dass diese Bauwerkselemente in der aktuellen Lebensphase des Bauwerks noch nicht oder nicht mehr vorhanden sind.

## Patentansprüche

1. Computerimplementiertes Verfahren zum Messen eines Baufortschritts bei einem Bauwerk (B), wobei
a) ein digitales Bauwerksmodell (BM) des Bauwerks (B) eingelesen wird,
b) anhand des Bauwerksmodells (BM) für ein jeweiliges Bauwerkselement (BE1,...,BE4) eine räumliche Anordnung einer Bauwerkselementfläche (F1,...,F4) im Bauwerk (B) ermittelt wird,
c) das Bauwerk (B) mittels eines 3-D-Scanners (S3D) abgetastet wird, wobei eine Vielzahl von räumlichen Abtastpunkten (P, P') erzeugt wird,
d) zumindest ein Teil der Abtastpunkte (P, P') räumlich entsprechenden Bauwerkselementflächen (F1,...,F4) zugeordnet wird,
**dadurch gekennzeichnet, dass**
e) für eine jeweilige Bauwerkselementfläche (F1,...,F4) anhand von den dieser Bauwerkselementfläche spezifisch zugeordneten Abtastpunkten (P, P') eine bauwerkselementflächenspezifische Tiefenkarte (DM2) generiert wird, und
f) die generierten Tiefenkarten (DM2) mit früher generierten Tiefenkarten (DM1) zur Ermittlung eines Baufortschritts verglichen werden.

2. Verfahren nach Anspruch 1, **dadurch gekennzeichnet,**
**dass** eine Abweichung (ΔTX, ΔDM) einer aktuell für eine Bauwerkselementfläche generierten Tiefenkarte (DM2) von einer früher für diese Bauwerkselementfläche generierten Tiefenkarte (DM1) ermittelt wird, und
**dass** abhängig von der ermittelten Abweichung (ΔTX, ΔDM) eine für diese Bauwerkselementfläche spezifische Baufortschrittsinformation ausgegeben wird.

3. Verfahren nach einem der vorhergehenden Ansprüche, **dadurch gekennzeichnet, dass**
eine aktuell für eine Bauwerkselementfläche generierte Tiefenkarte (DM2) in Form einer Abweichung (ΔTX, ΔDM) von einer früher für diese Bauwerkselementfläche generierten Tiefenkarte (DM1) gespeichert wird.

4. Verfahren nach Anspruch 3, **dadurch gekennzeichnet,**
**dass** die Abweichung (ΔTX, ΔDM) mittels eines Fragment-Shaders, insbesondere durch einen Grafikprozessor (GPU) ermittelt wird.

5. Verfahren nach Anspruch 3 oder 4, **dadurch gekennzeichnet, dass** die generierten Tiefenkarten (DM1, DM2) anhand der ermittelten Abweichungen (ΔTX, ΔDM) individuell für eine jeweilige Bauwerkselementfläche (F1,...,F4) versioniert werden.

6. Verfahren nach einem der vorhergehenden Ansprüche, **dadurch gekennzeichnet,**
**dass** eine oder mehrere Bauwerkselementflächen (F1,...,F4) anhand von Unstetigkeiten im Verlauf einer Oberflächennormale eines Bauwerkselements (BE1,...,BE4) und/oder anhand von Unstetigkeiten im Verlauf einer Materialeigenschaft eines Bauwerkselements (BE1,...,BE4) ermittelt werden.

7. Verfahren nach einem der vorhergehenden Ansprüche, **dadurch gekennzeichnet,**
**dass** das digitale Bauwerksmodell (BM) einen Bauwerksgraphen umfasst, in dem Bauwerkselemente als Knoten (B, S1, S2, PF, W) und Beziehungen zwischen Bauwerkselementen als Kanten gespeichert sind,
**dass** für ein jeweiliges Bauwerkselement ein oder mehrere Bauwerkselementflächen ermittelt und als zusätzliche, dem jeweiligen Bauwerkselement zugeordnete Knoten (F1,...,FN) gespeichert werden, und
**dass** eine für eine jeweilige Bauwerkselementfläche generierte Tiefenkarte in Zuordnung zu dem Knoten dieser Bauwerkselementfläche gespeichert wird.

8. Verfahren nach einem der vorhergehenden Ansprüche, **dadurch gekennzeichnet,**
**dass** eine Verdeckung und/oder Sichtbarkeit einer jeweiligen Bauwerkselementfläche (F1,...,F4) geprüft wird, und
**dass** die Zuordnung von Abtastpunkten (P, P') zu einer jeweiligen Bauwerkselementfläche (F1,...,F4) abhängig von deren Sichtbarkeit und/oder Verdeckung erfolgt.

9. Verfahren nach Anspruch 8, **dadurch gekennzeichnet,**
**dass** eine Position des 3-D-Scanners (S3D) relativ zum Bauwerk (B) eingelesen wird, und
**dass** die Prüfung auf Verdeckung und/oder Sichtbarkeit einer jeweiligen Bauwerkselementfläche (F1,...,F4) abhängig von der eingelesenen Position erfolgt.

10. Verfahren nach Anspruch 8 oder 9, **dadurch gekennzeichnet, dass**
abhängig von einer Verdeckung und/oder Sichtbarkeit einer jeweiligen Bauwerkselementfläche (F1,...,F4) und abhängig von einer Prüfung, ob der jeweiligen Bauwerkselementfläche (F1,...,F4) gemessene Abtastpunkte (P, P') räumlich entsprechen, die jeweilige Bauwerkselementfläche (F1,...,F4) als fehlend markiert wird.

11. Verfahren nach einem der vorhergehenden Ansprüche, **dadurch gekennzeichnet,**
**dass** die Generierung der Tiefenkarten (DM1, DM2) mittels eines Vertex-Shaders, insbesondere durch einen Grafikprozessor (GPU) erfolgt.

12. Anordnung zum Messen eines Baufortschritts bei einem Bauwerk (B), eingerichtet zum Ausführen eines Verfahrens nach einem der vorhergehenden Ansprüche.

13. Computerprogrammprodukt, eingerichtet zum Ausführen eines Verfahrens nach einem der Ansprüche 1 bis 11.

14. Computerlesbares Speichermedium mit einem Computerprogrammprodukt nach Anspruch 13.

## Claims

1. Computer-implemented method for measuring progress in the construction of a building (B), wherein
a) a digital building model (BM) of the building (B) is read in,
b) a spatial arrangement of a building element surface (F1,...,F4) in the building (B) is determined on the basis of the building model (BM) for a respective building element (BE1,...,BE4),
c) the building (B) is scanned by means of a 3D scanner (S3D), wherein a multiplicity of spatial scanning points (P, P') are generated,
d) at least some of the scanning points (P, P') are assigned to spatially corresponding building element surfaces (F1,...,F4), **characterized in that**
e) a building element surface-specific depth map (DM2) is generated for a respective building element surface (F1,...,F4) on the basis of the scanning points (P, P') specifically assigned to this building element surface, and
f) the generated depth maps (DM2) are compared with previously generated depth maps (DM1) in order to determine construction progress.

2. Method according to Claim 1, **characterized**
**in that** a deviation (ΔTX, ΔDM) of a depth map (DM2) currently generated for a building element surface from a depth map (DM1) previously generated for this building element surface is determined, and
**in that**, depending on the deviation (ΔTX, ΔDM) determined, construction progress information specific to this building element surface is output.

3. Method according to either of the preceding claims, **characterized in that**
a depth map (DM2) currently generated for a building element surface is stored in the form of a deviation (ΔTX, ΔDM) from a depth map (DM1) previously generated for this building element surface.

4. Method according to Claim 3, **characterized**
**in that** the deviation (ΔTX, ΔDM) is determined by means of a fragment shader, in particular by a graphics processing unit (GPU).

5. Method according to Claim 3 or 4, **characterized**
**in that** the generated depth maps (DM1, DM2) are versioned individually for a respective building element surface (F1,...,F4) on the basis on the deviations (ΔTX, ΔDM) determined.

6. Method according to any of the preceding claims, **characterized**
**in that** one or more building element surfaces (F1,...,F4) are determined on the basis of discontinuities in the profile of a surface normal of a building element (BE1,...,BE4) and/or on the basis of discontinuities in the profile of a material property of a building element (BE1,...,BE4).

7. Method according to any of the preceding claims, **characterized**
**in that** the digital building model (BM) comprises a building graph in which building elements are stored as nodes (B, S1, S2, PF, W) and relationships between building elements are stored as edges,
**in that** one or more building element surfaces are determined for a respective building element and are stored as additional nodes (F1,...,FN) assigned to the respective building element, and
**in that** a depth map generated for a respective building element surface is stored in a manner assigned to the node of this building element surface.

8. Method according to any of the preceding claims, **characterized**
**in that** occlusion and/or visibility of a respective building element surface (F1,...,F4) are/is checked, and
**in that** the assignment of scanning points (P, P') to a respective building element surface (F1,...,F4) is effected depending on the visibility and/or occlusion thereof.

9. Method according to Claim 8, **characterized**
**in that** a position of the 3D scanner (S3D) relative to the building (B) is read in, and
**in that** the checking for occlusion and/or visibility of a respective building element surface (F1,...,F4) is effected depending on the position read in.

10. Method according to Claim 8 or 9, **characterized in that** depending on occlusion and/or visibility of a respective building element surface (F1,...,F4) and depending on a check as to whether measured scanning points (P, P') spatially correspond to the respective building element surface (F1,...,F4), the respective building element surface (F1,...,F4) is marked as missing.

11. Method according to any of the preceding claims, **characterized**
**in that** the generation of the depth maps (DM1, DM2) is effected by means of a vertex shader, in particular by a graphics processing unit (GPU).

12. Arrangement for measuring progress in the construction of a building (B), configured for carrying out a method according to any of the preceding claims.

13. Computer program product, configured for carrying out a method according to any of Claims 1 to 11.

14. Computer-readable storage medium having a computer program product according to Claim 13.

## Revendications

1. Procédé implémenté sur ordinateur de mesure de l'avancement de la construction dans une construction (B), dans lequel
a) un modèle de construction numérique (BM) de la construction (B) est mis en mémoire,
b) à l'aide du modèle de construction numérique (BM), un agencement physique d'une surface d'élément de construction (F1, ...F4) est déterminé dans la construction (B) pour un élément de construction (BE1, ..., BE4) respectif,
c) la construction (B) est balayée au moyen d'un scanner 3D (S3D), dans lequel une pluralité de points de balayage physiques (P, P') est produite,
d) au moins une partie des points de balayage physiques (P, P') est attribuée à des surfaces d'élément de construction (F1, ...F4) correspondantes physiquement,
**caractérisé en ce que**
e) pour une surface d'élément de construction (F1, ...F4) respective, une carte de profondeurs (DM2) spécifique à la surface d'élément de construction est générée à l'aide des points de balayage physiques (P, P') attribués spécifiquement à cette surface d'élément de construction, et
f) les cartes de profondeurs générées (DM2) sont comparées à des cartes de profondeurs générées auparavant (DM1) pour déterminer un avancement.

2. Procédé selon la revendication 1, **caractérisé en ce qu'**un écart (ΔTX, ΔDM) d'une carte de profondeurs (DM2) générée actuellement pour une surface d'élément de construction par rapport à une carte de profondeurs (DM1) générée auparavant pour cette surface d'élément de construction est déterminé, et
qu'en fonction de l'écart (ΔTX, ΔDM) déterminé, une information d'avancement de la construction spécifique à cette surface d'élément de construction est émise.

3. Procédé selon l'une des revendications précédentes, **caractérisé en ce que**
une carte de profondeurs (DM2) générée actuellement pour une surface d'élément de construction est enregistrée sous forme d'un écart (ΔTX, ΔDM) par rapport à une carte de profondeurs (DM1) générée auparavant pour cette surface d'élément de construction.

4. Procédé selon la revendication 3, **caractérisé en ce que** l'écart (ΔTX, ΔDM) est déterminé au moyen d'un fragment-shader, en particulier par un processeur graphique (GPU).

5. Procédé selon la revendication 3 ou 4, **caractérisé en ce que** les cartes de profondeurs (DM1, DM2) générées sont versionnées individuellement pour une surface d'élément de construction (F1, ...F4) respective à l'aide des écarts (ΔTX, ΔDM) déterminés.

6. Procédé selon l'une des revendications précédentes, caractérisé en ce queune ou plusieurs surface(s) d'élément de construction (F1, ...F4) est/sont déterminée(s) à l'aide de discontinuités dans le tracé d'une normale de surface d'un élément de construction (BE1, ..., BE4) et/ou à l'aide de discontinuités dans le tracé d'une propriété de matériau d'un élément de construction (BE1, ..., BE4).

7. Procédé selon l'une des revendications précédentes, **caractérisé en ce que**
le modèle de construction numérique (BM) comprend un graphique de construction, dans lequel des éléments de construction sont enregistrés en tant que nœuds (B, S1, S2, PF, W) et des relations entre les éléments de construction sont enregistrées en tant qu'arêtes,
que pour un élément de construction respectif, une ou plusieurs surface(s) d'élément de construction est/sont déterminée(s) et enregistrées en tant que nœuds supplémentaires (F1, ..., FN) attribués à l'élément de construction respectif, et
qu'une carte de profondeurs générée pour une surface d'élément de construction respective est enregistrée en attribution aux nœuds de cette surface d'élément de construction.

8. Procédé selon l'une des revendications précédentes, **caractérisé en ce que**
une occultation et/ou visibilité d'une surface d'élément de construction (F1, ...F4) respective est vérifiée, et que l'attribution de points de balayage physiques (P, P') à une surface d'élément de construction (F1, ...F4) respective est effectuée en fonction de leur occultation et/ou visibilité.

9. Procédé selon la revendication 8, **caractérisé en ce qu'**une position du scanner 3D (S3D) par rapport à la construction (B) est mise en mémoire, et
que la vérification de l'occultation et/ou de la visibilité d'une surface d'élément de construction (F1, ...F4) respective est effectuée en fonction de la position mise en mémoire.

10. Procédé selon la revendication 8 ou 9, **caractérisé en ce qu'**en fonction d'une occultation et/ou visibilité d'une surface d'élément de construction (F1, ...F4) respective et en fonction d'une vérification, si des points de balayage (P, P') mesurés correspondent physiquement à la surface d'élément de construction (F1, ...F4) respective, la surface d'élément de construction (F1, ...F4) respective est marquée comme manquante.

11. Procédé selon l'une des revendications précédentes, **caractérisé en ce que**
la génération des cartes de profondeurs (DM1, DM2) est effectuée à l'aide d'un vertex-shader, en particulier par un processeur graphique (GPU).

12. Agencement pour mesurer l'avancement de la construction dans une construction (B), équipé pour exécuter un procédé selon l'une des revendications précédentes.

13. Produit de programme informatique équipé pour exécuter un procédé selon l'une des revendications 1 à 11.

14. Support de mémoire lisible sur ordinateur comprenant un produit de programme informatique selon la revendication 13.
